# EUROPEAN PATENT APPLICATION

(11) **EP 2 104 058 A1**
(43) Date of publication of application: **23.09.2009**
(21) Application number: 09152863.8
(22) Date of filing: 13.02.2009
(51) Int. Cl.: G06K 9/00, H04N 5/232

(54) **Priority target determining device, electronic equipment, priority target determining method, program, and recording medium**

(30) Priority: 14.03.2008 JP 2008066774
(71) Applicant: Omron Corporation, Kyoto-shi, Kyoto 600-8530 (JP)
(72) Inventor: Hosoi, Satoshi, Kyoto Kyoto 600-8530 (JP)
(74) Representative: Brochard, Pascale

(57) **Abstract**

A priority target determining device for determining a preferential face image from a plurality of face images contained in a plurality of original images has a face detecting portion for detecting a face image and positional information from the plurality of original images, a face checking portion for checking a feature of the face image detected by the face detecting portion with a feature of the face image detected in the past, and a determining portion for determining the face images as the preferential face image when number of face images in which the features match reaches a predetermined number as a result of the check by the face checking portion. If the position of the face image detected by the face detecting portion is outside a region set in the original image, the face detecting portion does not send the face image, the face checking portion does not execute the check related to the face image.

## Description

### BACKGROUND OF THE INVENTION

### 1. TECHNICAL FIELD

The present invention relates to a priority target determining device for checking data of an imaged face image and determining whether a target to prioritize, electronic equipment, a priority target determining method, a program and a recording medium.

### 2. RELATED ART

Conventionally, in photographing equipment such as a digital camera, attempts have been made to recognize a face according to a subject, and automatically perform various settings, control process, or the like of the camera for photographing such as auto-focus, auto-iris, and auto-framing.

In recent years, a function of identifying a subject, and performing a specific setting and control process on the identified specific subject to assist photographing is being reviewed.

Japanese Unexamined Patent Publication No. 2005-341017 discloses a camera device and a program for specifying a subject of high photographing frequency as a photographing target candidate to photograph for this time from a photographed frame photographed in the past.

Japanese Unexamined Patent Publication No. 2007-006033 discloses a target determining device for calculating a detection frequency from a detection history of the detected face, registering the face with highest detection frequency, and selecting the same as the face to be the target of photographing control such as focusing, an imaging device, and a monitoring device.

### SUMMARY

However, in the conventional configuration, the subject for calculating the frequency is calculated with the same weight regardless of the position in the photographing frame, and thus the face appearing small at the edge of the frame and the face appearing large at the middle are similarly handled, whereby a problem in that a person not intended by the user is automatically registered arises.

In the conventional configuration, a selecting target is determined based on the frequency the subject appears, and thus a subject other than the subject, who is originally the selecting target, is counted as the photographing target candidate even if appearing over plural times in the photographed image, and a target not fit to be the selecting target may be selected.

The present invention has been devised to solve the problems described above, and an object thereof is to realize a priority target determining device capable of identifying an appropriate photographing target desired by the user and determining the target as a target to prioritize, electronic equipment, a priority target determining method, a program, and a recording medium.

In accordance with one aspect of the present invention, a priority target determining device according to the present invention relates to a priority target determining device for determining a preferential face image from a plurality of face images contained in a plurality of original images; the priority target determining device including face detecting means for detecting a face image and positional information from the plurality of original images; face checking means for checking a feature of the face image detected by the face detecting means with a feature of the face image detected in the past; and determining means for determining the face images as a preferential face image when number of face images in which the features match reaches a predetermined number as a result of the check by the face checking means; wherein if the position of the face image detected by the face detecting means is outside a region set in the image, the face detecting means does not send the face image, the face checking means does not execute the check related to the face image, or the determining means excludes the number of face image from the number of face images.

In accordance with another aspect of the present invention, a priority target determining method according to the present invention relates to a priority target determining method for determining a preferential face image from a plurality of face images contained in a plurality of original images; the priority target determining method including the steps of face detecting step of detecting a face image and positional information from the plurality of original images; face checking step of checking a feature of the face image detected in the face detecting step with a feature of the face image detected in the past; and determining step of determining the face images as a preferential face image when number of face images in which the features match reaches a predetermined number as a result of the check by the face checking step; wherein if the position of the face image detected in the face detecting step is outside a region set in the image, the face image is not the target of processing in the face detecting step, the face checking step, or the determining step.

According to such a configuration, whether or not the face image of the target is the target to prioritize is determined based on the positional information, and thus judging the face image that is not the priority target but photographed or appearing small at the edge of the screen but in the photographing range at high frequency as the target to prioritize is avoided, whereby the priority target desired by the user can be more accurately registered.

Considering the usage state of the normal digital camera and the digital video camera, the user attempts to bring the person such as families and relatives the user desires to preferentially perform processing such as auto-focusing to the middle of the frame and perform photographing. Therefore, the appearance frequency of the person is calculated using the similarity result of the face recognition of the person appearing near the middle of the frame to automatically estimate which person the user desires to prioritize.

The registration process necessary in performing auto-focusing and the like on a specific person can be automated by automatically registering the face of a person of high appearance frequency. Thus, photographing control such as auto-focusing on a specific person can be realized without forcing a special operation even by a user who is unfamiliar with the operation of the machine.

The positional information of the face image may be judged based on the center coordinate of the face, or one of the vertices of the rectangle surrounding the face may be set as the reference. The contour line or the boundary line of the face, or the position of parts such as an eye, a nose, or a mouse may be set as the reference. Any reference may be used as long as the position where the face exists with respect to the image region can be grasped.

In the priority target determining device, the determining means excludes the face image from the preferential face image when the number of face images in which the features match reaches the predetermined number and at least one of size information or frequency information of the face image does not reach a predetermined value.

According to such a configuration, whether or not the target is the priority target is judged based on the size and the appearance frequency of the face image in addition to the positional information of the face image existing within a predetermined range, and thus the possibility of the user judging the non-desiring small face image, the face image of low appearance frequency, the face image in which time elapsed from registration, or the like as the priority target is reduced, and whether or not the target is the priority target can be more accurately judged.

The "facial size" is the information used to judge whether or not to register the face image having a size of greater than or equal to a predetermined value as a target to prioritize, and may be distance information in units of pixels, or vector and data size may be used. The frequency information is information calculated from the data indicating the time the record is registered, and the frequency the face information is registered in the relevant classification within a predetermined period may be calculated and derived from the time information.

In the priority target determining device, face image registering means for registering the face image or a feature quantity indicating the feature of the face image and information of the position of the face image in correspondence to each other is further arranged; wherein the determining means determines whether or not to exclude from the preferential face image based on the positional information registered in the face image registering means.

According to such a configuration, the positional information is registered in the face information database, and whether or not the target is the priority target is judged based on the positional information when registering in the priority information database, and thus the positional information can be acquired based on the registered face information database without performing the calculation of the positional information in real time, whereby whether or not the priority target can be judged at high speed.

In the priority target determining device, similarity detecting means for calculating the similarity from the feature quantity of the face image is further arranged; wherein the determining means sets the predetermined number for determining the detected face image as the preferential face image to be small when the similarity between the face image detected by the face detecting means and the preferential face image is high.

According to such a configuration, the predetermined number for determining as the preferential face image is set small for the target of the face image of high similarity, and thus judgment is made that the target of high similarity such as parent and child, or relatives has a high possibility of being the priority target, and the registering condition for the priority target is set low, whereby the judgment of the priority target can be made in a shorter period of time. The above process is performed on the target on which the face checking means identified the face image of the target as not the same person.

Electronic equipment having similar effects can be configured by arranging the priority target determining device.

The electronic equipment can be provided with imaging means for imaging a subject; a priority information storage portion for storing a feature quantity indicating the feature of the preferential face image; face authentication means for authenticating the preferential face image stored in the priority information storage portion and the face image detected by the face detecting means; and imaging condition setting means for judging whether or not a subject photographed by the imaging means is the priority target based on the authentication result of the face authenticating means, and setting imaging conditions of the imaging means.

According to such a configuration, the subject is identified based on a more accurately registered priority target, and the photographing conditions can be changed, whereby the priority target is more accurately judged, and an appropriate photographing condition can be set.

The priority target determining device and the electronic equipment may be realized by a computer, in which case, a control program of the priority target determining device for realizing the priority target determining device and the electronic equipment in a computer by operating the computer as each means described above, and a computer readable recording medium recorded with the same are also within the scope of the present invention.

A priority target determining device according to the present invention relates to a priority target determining device for determining a preferential face image from a plurality of face images contained in a plurality of original images; the priority target determining device including face detecting means for detecting a face image and positional information from the plurality of original images; face checking means for checking a feature of the face image detected by the face detecting means and a feature of the face image detected in the past; and determining means for determining the face images as a preferential face image when number of face images in which the features match reaches a predetermined number as a result of the check by the face checking means; wherein if the position of the face image detected by the face detecting means is outside a set region, the face detecting means does not send the face image, the face checking means does not execute the check related to the face image, or the determining means excludes the number of face image from the number of face images.

A priority target determining method according to the present invention relates to a priority target determining method for determining a preferential face image from a plurality of face images contained in a plurality of original images; the priority target determining method including the steps of face detecting step of detecting a face image and positional information from the plurality of original images; face checking step of checking a feature of the face image detected in the face detecting step with a feature of the face image detected in the past; and determining step of determining the face images as a preferential face image when number of face images in which the features match reaches a predetermined number as a result of the check by the face checking step; wherein if the position of the face image detected in the face detecting step is outside a set region, the face image is not sent in the face detecting step, the check related to the face image is not executed in the face checking step, or the number of face image is excluded from the number of face images in the determining step.

According to such a configuration, the face image that becomes the target to prioritize is determined based on positional information, and thus mistaken determination of the priority target is reduced, and the priority target can be more accurately determined.

### BRIEF DESCRIPTION OF THE DRAWINGS

Fig. 1 is a block diagram showing a configuration of the main parts of a photographing device including a registration processing unit, a recognition processing unit, and an imaging processing unit, showing one embodiment of the present invention;
Fig. 2 is a flowchart showing the flow of process when identifying the face image and registering the same in a database in imaging equipment;
Fig. 3 is a flowchart showing the flow of process of referencing the registered database and changing the photographing condition in the imaging equipment;
Fig. 4 is a table showing one example of a data structure of the face information database used in an identifying device;
Fig. 5 is a table showing one example of a data structure of the priority information database used in the identifying device; and
Fig. 6 is a block diagram showing a configuration of the main parts of photographing equipment including the registration processing unit, the recognition processing unit, and the imaging processing unit, showing another embodiment of the present invention.

### DETAILED DESCRIPTION

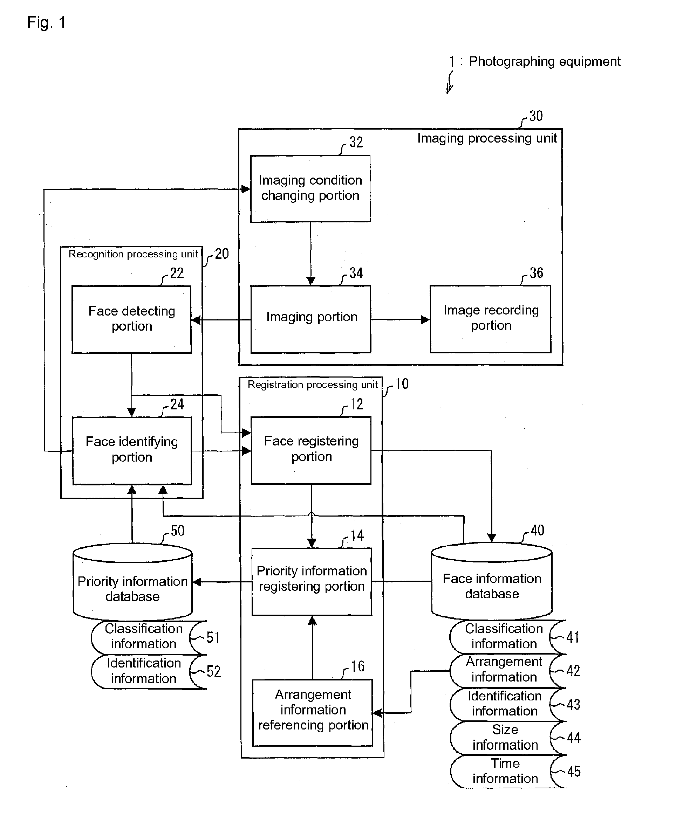

One embodiment of the present invention will be described below based on Figs. 1 to 5.

Fig. 1 is a block diagram showing a configuration of the main parts of a photographing device including a registration processing unit, a recognition processing unit, and an imaging processing unit in the present embodiment. The present embodiment will be described as the photographing device equipped with the photographing unit, but is not limited thereto. The present embodiment may be a recording device for recording input image data, or may be a printing device for printing input face image. The present embodiment may also relate to a communication device for transmitting the input face image, or an image processing device for editing the input face image.

Photographing equipment (electronic equipment) 1 includes a registration processing unit 10, a recognition processing unit 20, an imaging processing unit 30, a face information database 40, and a priority information database 50. The registration processing unit 10 includes a face registering portion 12 (face image registering means), a priority information registering portion (determining means) 14, and an arrangement information referencing portion 16. The recognition processing unit 20 includes a face detecting portion (face detecting means) 22 and a face identifying portion (face checking means, face authentication means) 24. The imaging processing unit 30 includes an imaging condition changing portion (imaging condition setting means) 32, an imaging portion (imaging means) 34, and an image recording portion 36.

The image recording portion 36 is recorded with image data imaged by the imaging portion 34 and stored in a frame memory. The image recording portion 36 is configured using a non-volatile memory such as a flash memory, or a magnetic disk such as a hard disk.

The face information database 40 is stored with classification information (ID) 41, arrangement information 42, identification information 43, size information 44, and time information 45 in correspondence to each other. The priority information database 50 is recorded with classification information (ID) 51 and identification information 52 in correspondence to each other. The face information database 40 and the priority information database 50 may be recorded as different databases in the same storage device, or may be recorded in different storage devices. Each database may be saved using part of a storage region of the image recording portion 36.

The operation of each unit when photographing is performed by the user will be described in order. First, when photographing is performed by the user, an arbitrary photographed image including a face image is input from the imaging portion 34. In this case, the input image is described as a live view image output to a display unit (not shown) in real time where the display can be updated, but is not limited thereto. Data processing may be performed on photographed image recorded in the image recording portion 36.

The imaging portion 34 is configured by an imaging lens, an imaging element, a frame memory, a mechanical mechanism, a motor, and the like. For instance, the imaging lens includes a zoom lens for realizing the zoom function, a focus lens for focusing on an arbitrary subject, or the like. The motor includes a zoom lens motor, a focus motor, a shutter motor, or the like. The imaging element may be a photoelectric transducer such as a CCD (Charge Coupled Device) and a CMOS (Complementary Metal Oxide Semiconductor).

The photographed image input from the imaging portion 34 is output to the recognition processing unit 20, and a face region contained in the photographed image is detected in the face detecting portion 22. The face detecting portion 22 detects the faces of people from the input image, and outputs number, position, and the like of the detected faces. The face detecting portion 22 cuts out a face region from the photographed image through a predetermined method, and outputs the cut out face image to the face identifying portion 24 to determine who the photographed target is.
Furthermore, the face detecting portion 22 outputs the cut out face image to the face registering portion 12 of the registration processing unit 10 to register the classification information 41, the arrangement information (positional information) 42 of the face image, and the size information 44 of the cut out face image in the face information database 40.

The positional information of the face image may be determined based on the center coordinate of the face, or one of the vertices of the rectangle surrounding the face may be set as the reference. The contour line or the boundary line of the face, the position of parts such as an eye, a nose, or a mouse may be set as the reference. Any reference may be used as long as the position where the face exists with respect to the image region can be relatively grasped. The size information 44 of the face image may be distance information in units of pixels, or may be vector or data size. Here, description will be made using the center coordinate of the face for the arrangement information 42, and the number of pixels in width of the face image for the size information 44.

The face identifying portion 24 calculates a predetermined feature quantity from the face image output from the face detecting portion 22, performs a check with each face information, particularly the identification information 43, registered in the face information database 40, judges who the target of the face image is, and outputs the result to the face registering portion 12 of the registration processing unit 10 as the identification information 43. The face identifying portion 24 also references the priority information database 50, performs a check of the person of the detected face image, and outputs the check result to the imaging condition changing portion 32.

Specifically, the face identifying portion 24 extracts feature information of the detected face, compares the feature information of the detected face and the feature information of the face recorded in the face information database 40, and registers the detection history (thumbnail image for visual checking, detected date and time, facial size, face position, face authentication registration data, etc.) of the detected face in the face information database 40.

The face registering portion 12 of the registration processing unit 10 registers the face image input from the face detecting portion 22, the arrangement information 42, and the size information 44, as well as the identification information 43 output from the face identifying portion 24 in correspondence to each other in the face information database 40 along with the current time information 45. The face information database 40 holds the detected date and time, the facial size, the face position, and the face authentication registration data as the detection history of the face identified in the face identifying portion 24.

The priority information registering portion 14 registers the face authentication registration data (classification information 51, identification information 52) in the priority information database 50 if the frequency of the person photographed at greater than or equal to a specific size at the vicinity of the middle of the frame is greater than or equal to a certain threshold value from the detection history recorded in the face information database 40. That is, the priority information registering portion 14 judges whether or not the arrangement information 42 of the face information is contained in a predetermined range through the arrangement information referencing portion 16 every time the face information database 40 is updated.

The predetermined range of the arrangement information 42 to be referenced by the arrangement information referencing portion 16 will be described below as a region of a range (e.g., inner side by greater than or equal to 20% from both ends at the top and bottom, left and right of the photographed image) near the middle of the photographed image, but is not limited thereto. The predetermined range may be any range as long as it is a region the target to prioritize by the user is contained in great number.

If the classification information 41 in which the arrangement information 42 is judged as being included in the predetermined range by the arrangement information referencing portion 16 out of the data registered in the face information database 40 exceeds a predetermined number, the priority information registering portion 14 determines the classification information 41 as the face image of the person which is the target to prioritize, and performs a process of registering the classification information 51 and the identification information 52 in the priority information database 50.

The face identifying portion 24 checks whether or not the face image contained in the image input from the imaging portion 34 is the target to prioritize from the classification information 51 and the identification information 52 registered in the priority information database 50. The imaging condition changing portion 32 changes the imaging condition based on the information of the priority target checked in the face identifying portion 24. Specifically, the imaging condition changing portion performs a control on the imaging portion 34 such as controlling the imaging portion to focus on a specific subject, controlling the shutter speed and the aperture to align exposure, or controlling the zoom lens to change the field angle.

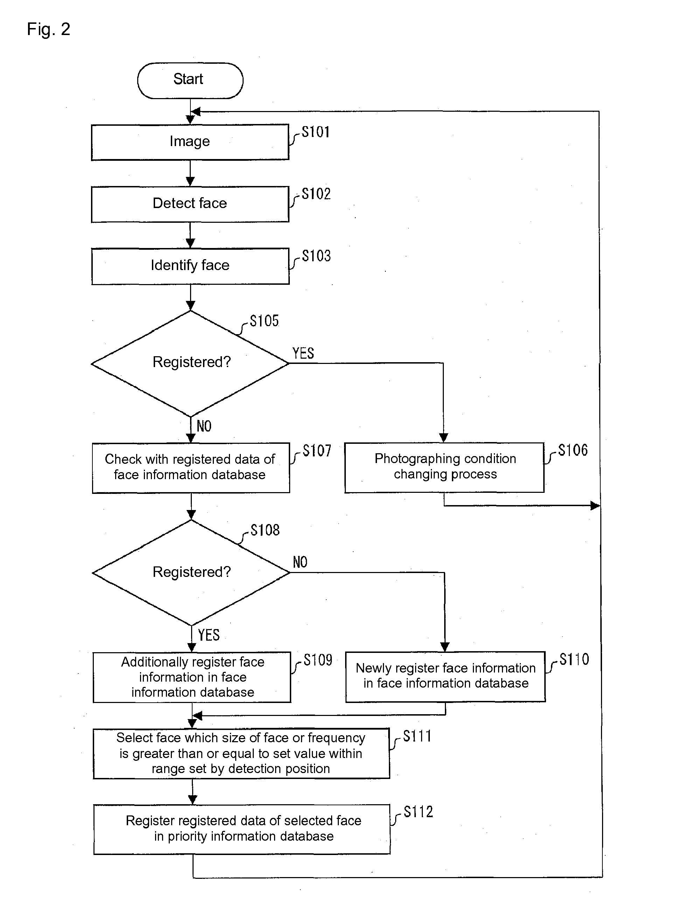

The flow of the process of registering various information in the face information database 40 will be described below with reference to Fig. 2. Fig. 2 is a flowchart showing the flow of the process when identifying the face image and registering the same in the database in the imaging equipment.

When the process is started, the user directs the imaging portion 34 of the photographing equipment 1 towards the subject and starts imaging in S101. The imaged image is displayed in real time in live view on the display unit (not shown) (finder screen) as a preview image.

In S102, the image imaged in the imaging portion 34 is processed in the face detecting portion 22 of the recognition processing unit 20, and the region including the face image is cut out and the positional information indicating the position in the imaged image of the region including the face image is acquired. The cut out face image and the acquired positional information are output to the face identifying portion 24 and the face registering portion 12 of the registration processing unit 10.

In S103, the feature quantity is calculated from the face image cut out in the process of S102 as the identification information, and identification is made on which person the face image of the target is. In S105, the identification information of the target of the face image, which feature quantity is calculated, and the face image registered in the priority information database 50 are checked, and whether or not the target to prioritize is judged.

If the target to check is already registered (YES in S105), the target of the relevant face image is registered as the target to prioritize, and thus a process of changing the photographing condition is performed (S106), and thereafter, the process returns to S101. If the target to check is not registered (NO in S105), check is performed with the data registered in the face information database 40 to judge whether or not to register the target of the relevant face image as the target to prioritize (S107).

If the face image of the target to perform the check in S107 is registered in the face information database 40 (YES in S108), the process proceeds to S109. If the face image of the target to perform the check in S107 is not registered in the face information database 40 (NO in S108), the process proceeds to S110.

In S109, the face registering portion 12 registers the face image of the check target already identified, classified and registered in the face information database 40, and thereafter, the process proceeds to S111. In S110, the face registering portion 12 creates a new classification with respect to the face information database 40 and registers the face image, and thereafter, process proceeds to S111.

In the registration process of S109 and S110, the identification information 43, the size information 44, and the time information 45 indicating the registered time of the relevant face image are registered in addition to the face image cut out and acquired in the process of S102 and the arrangement information 42 of the face image. Each information is used to judge whether or not the priority target to register in the priority information database 50.

In S111, the priority information registering portion 14 judges whether or not the target registered in the face information database 40 is the target to prioritize. Specifically, the priority information registering portion 14 selects a target positioned at the middle of the screen, which number registered within a predetermined period exceeds a predetermined number.

In the present embodiment, whether positioned at the middle of the screen is judged by having the arrangement information referencing portion 16 reference the arrangement information 42 registered in the face information database 40, but is not limited thereto. The face detecting portion 22 may output only the face image contained in a predetermined region to the face identifying portion 24, or the face registering portion 12 may register only the information related to the face image contained in the predetermined region in the face information database 40.

The face image near the middle of the screen is used to judge whether or not the target to prioritize, but a range other than the middle may be used for the predetermined range. The predetermined region may be any region if the face image existing in a specific region tends to be selected as the priority target. However, since the target to prioritize generally tends to be positioned at the middle of the photographing region, the priority target can be more accurately discriminated by using the middle as the predetermined region.

With regards to the classification information 51 and the identification information 52 to register in the priority information database 50, the classification information 41 and the identification information 43 registered in the face information database 40 may be registered as is as the classification information 51 and the identification information 52 in the priority information database 50, but only the feature quantity calculated from the face information may be registered to each database.

Finally, in S112, the priority information registering portion 14 registers the face image of the target selected in S111 and the identification information in the priority information database 50 in correspondence to each other, and the process returns to S101.

A process of classifying and registering a new target in the face information database 40, and determining a target in which the number to register contained in a predetermined region exceeds a certain number as a priority target is performed by repeating the above processing procedures.

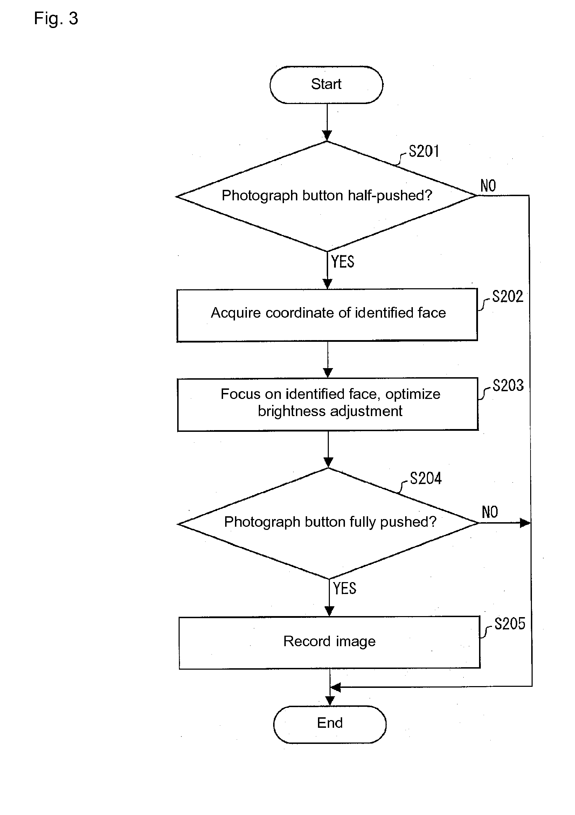

The flow of the process of changing the photographing condition in the imaging condition changing portion 32 will be described below with reference to Fig. 3. Fig. 3 is a flowchart showing the flow of the process of changing the photographing condition in the imaging condition changing portion 32 by referencing the priority information database 50 registered with the information of the target to prioritize in the photographing equipment 1.

In the initial state, the user directs the imaging portion 34 of the photographing equipment 1 towards the subject and attempts to perform photographing. In this case, the imaged image is displayed in real time in live view on the display unit (not shown) (finder screen) as a preview image. The user performs an operation of focusing on the photographing target through the operation of half-pushing the photograph button (shutter) (not shown) of the photographing equipment 1.

In S201, the imaging processing unit 30 of the photographing equipment 1 judges whether or not the photograph button is half-pushed. If the photograph button is half-pushed (YES in S201), the process proceeds to S202. If the photograph button is not half-pushed (NO in S201), the process is terminated.

In S202, the face identifying portion 24 acquires a coordinate of a region of the face image including the classification information 51 or the identification information 52 of the target registered as the priority target in the priority information database 50 from the image photographed in the imaging portion 34. The coordinate of the face image may be calculated by the face detecting portion 22 and sent to the face identifying portion 24, or the arrangement information referencing portion 16 may be arranged in the recognition processing unit 20 and the positional information may be acquired through the arrangement information referencing portion 16.

In S203, the face image which coordinate is acquired in S202 is focused, and the photographing condition is set to optimize the brightness adjustment. Thereafter, when detected that the photograph button is fully pushed (YES in S204), the imaging processing unit 30 performs photographing using the imaging condition set in S203, records the photographed image in the image recording portion 36 (S205), and terminates the process of changing the photographing condition. If the photograph button is not fully pushed (NO in S204), the imaging condition is not changed, and the process is terminated as is.

Through the series of processes described above, the imaging condition can be changed and the photographing can be performed using the information of the priority target registered in the priority information database 50.

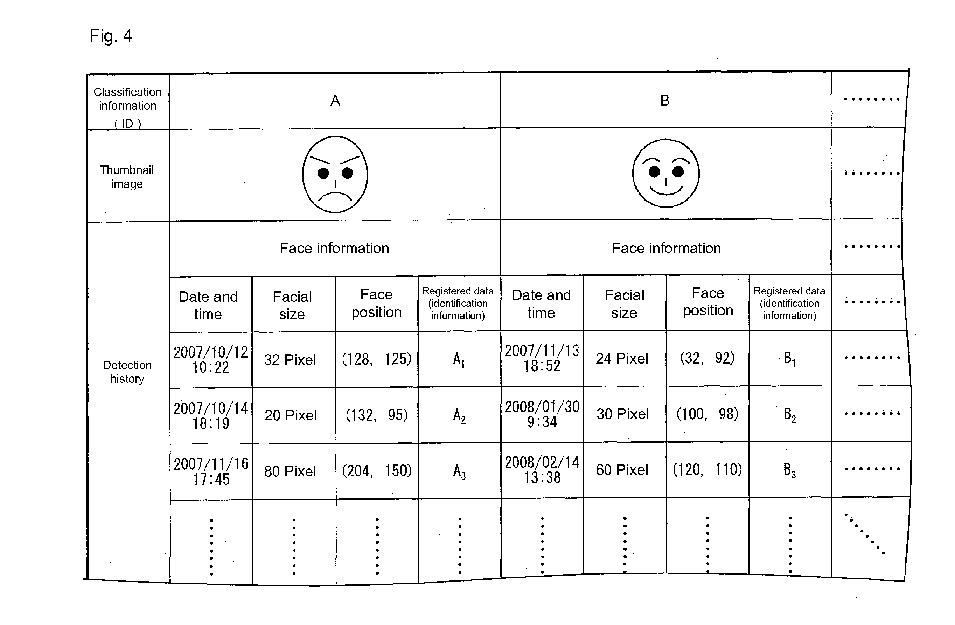

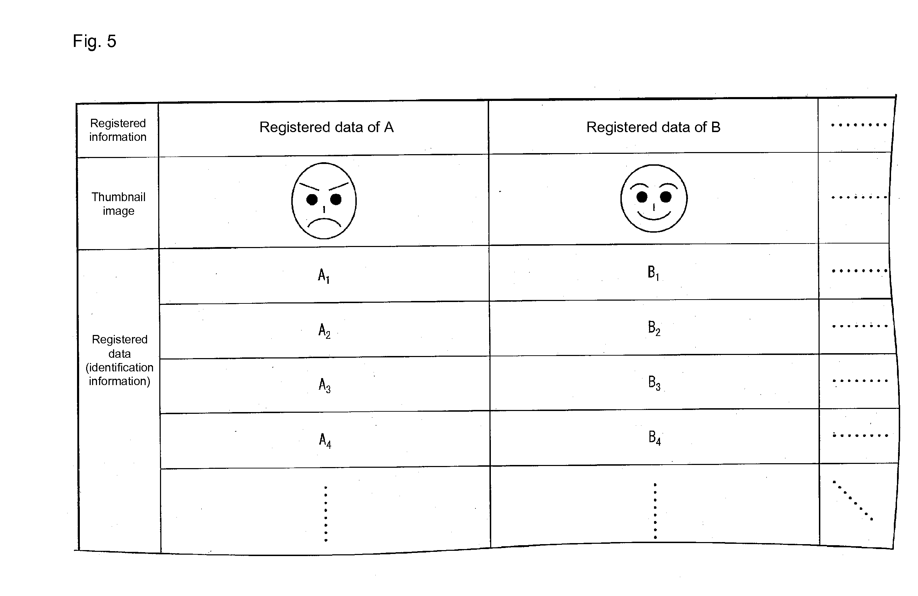

Specific examples of a data structure of the face information database 40 and the priority information database 50 used in the photographing equipment 1 of the present embodiment will be described using Figs. 4 and 5.

Fig. 4 is a table showing one example of a data structure of the face information database 40. Fig. 5 is a table showing one example of a data structure of the priority information database 50.

In Fig. 4, the identifying targets are classified into two people, A and B, and the classification information 41 is registered. One thumbnail image for identifying the person A is recorded in correspondence to the classification information 41 in the face information of A. In the classification of A, a record in which plural face information including the time information 45 and the classification information 41 indicating the person A are corresponded is registered in plurals. One thumbnail image for the user to check the person B is recorded in the face information of B, and plural face information are registered in correspondence to the classification information 41 and the thumbnail image.

First, in the first row of classification A, registered data "A₁" indicating the identification information 43 of which the time information 45 is "2007/10/12 10:22", the size information 44 is "32 pixels", and the arrangement information 42 is "(128, 125)" is registered as a record. In the second row of classification A, "2007/10/14 18:19", "20 pixels", "(132, 95)", and "A₂" are registered as a corresponding record, and in the third row of classification A, "2007/11/16 17:45", "80 pixels", "(204, 150)", and "A₃" are registered as a corresponding record.

The "date and time" is data indicating the time the record is registered, and is used when calculating the frequency the face information is registered in the relevant classification. The "facial size" is used to judge whether or not to register the face image having a size of greater than or equal to a predetermined value as a target to prioritize. The "face position" is used to judge whether or not to register the face image in a predetermined region such as near the middle as the target to prioritize. The "registered data" is data used to judge to which classification the input face image belongs, where the feature quantity calculated from the face image may be used as the identification information 43, or the cut out face image data may be used as is.

In the first row of classification B, registered data "B₁" indicating the identification information 43 of which the time information 45 is "2007/11/13 18:52", the size information 44 is "24 pixels", and the arrangement information 42 is "(32, 92)" is registered as a record. In the second row of classification B, "2008/1/30 9:34", "30 pixels", "(100, 98)", and "B₂" are registered as a corresponding record, and in the third row of classification B, "2008/2/14 13:38", "60 pixels", "(120, 110)", and "B₃" are registered as a corresponding record.

In Fig. 5, the identification information 52 of the person determined as the target to prioritize is classified and registered for each person. In Fig. 5, the identifying target is classified into two people, A and B, similar to Fig. 4, and the classification information 51 is registered.

One thumbnail image for the user to check the person A is recorded in the face information of A. A record in which plural classification information 51 and the identification information 52 are corresponded is registered in plurals in the classification of A. First, the registered data "A₁" indicating the identification information 52 is registered as a record in the first row of the classification A. "A₂" is registered as a corresponding record in the second row of the classification A, "A₃" is registered as a corresponding record in the third row of the classification A, "A₄" is registered as a corresponding record in the fourth row of the classification A.

One thumbnail image for the user to check the person B is recorded in the face information of B. A record in which plural classification information 51 and the identification information 52 are corresponded is registered in plurals in the classification of B. First, the registered data "B₁" indicating the identification information 52 is registered as a record in the first row of the classification B. "B₂" is registered as a corresponding record in the second row of the classification B, "B₃" is registered as a corresponding record in the third row of the classification B, and "B₄" is registered as a corresponding record in the fourth row of the classification B.

Regarding "A₁", "A₂" ..., "B₁", "B₁"... or the registered data for identifying the priority target, the registered data shown in Fig. 4 may be used as is, or a feature quantity may be newly calculated using face image, or the like corresponding to the registered data shown in Fig. 4 and used as the identification information 52.

Therefore, the photographing equipment 1 of the present embodiment is the photographing equipment 1 for determining a preferential face image from a plurality of face images contained in a plurality of original images, the photographing equipment 1 including the face detecting portion 22 for detecting the face image and arrangement information 42 which is positional information thereof, from a plurality of images; the face identifying portion 24 for checking the identification information 52, which is the feature of the face image detected by the face detecting portion 22, with the identification information 52, which is the feature of the face image detected in the past; and the priority information registering portion 14 for determining the face images as the preferential face image when the number of face images in which the features match reaches a predetermined number as a result of the check by the face identifying portion 24, and registering the face image in the priority information database 50; wherein if the position of the face image detected by the face detecting portion 22 is outside the region at the middle set in the original image, the priority information registering portion 14 excludes the number of face image from the number of face images.

According to such a configuration, whether or not the face image of the target is the target to prioritize is determined based on the positional information, and thus judging the face image that is not the priority target but photographed or appearing small at the edge of the screen but in the photographing range at high frequency as the target to prioritize is avoided, whereby the priority target desired by the user can be more accurately registered.

In the present embodiment, the positional information of the face image may be judged based on the center coordinate of the face, or one of the vertices of the rectangle surrounding the face may be set as the reference. The contour line or the boundary line of the face, or the position of parts such as an eye, a nose, or a mouse may be set as the reference. Any reference may be used as long as the position where the face exists with respect to the image region can be relatively grasped.

In the photographing equipment 1 of the present embodiment, the priority information registering portion 14 excludes the face image from the preferential face image when the number of face images in which the features match reaches a predetermined number and at least one of the size information 44 of the face image or the frequency information obtained from the time information 45 is greater than or equal to a predetermined value.

According to such a configuration, whether or not the target is the priority target is judged based on the size and the appearance frequency of the face image in addition to the positional information of the face image existing within a predetermined range, and thus the possibility of the user judging the non-desiring small face image, the face image of low appearance frequency, the face image in which time elapsed from registration, or the like as the priority target is reduced, and whether or not the target is the priority target can be more accurately judged.

The "facial size" is the information used to judge whether or not to register the face image having a size of greater than or equal to a predetermined value as a target to prioritize, and may be distance information in units of pixels, or vector and data size may be used. The frequency information is information calculated from the data indicating the time the record is registered, and the frequency the face information is registered in the relevant classification within a predetermined period may be calculated and derived from the time information.

In the photographing equipment 1 of the present embodiment, the face registering portion 12 for registering the face image and the information of the position of the face image in correspondence to each other is further arranged, where the determining means determines whether or not to exclude the face image from the preferential face image based on the face image and the information of the position registered in the face image registering means.

According to such a configuration, the arrangement information 42 is registered in the face information database, and whether or not the target is the priority target is judged based on the positional information when registering in the priority information database, and thus the positional information can be acquired based on the registered face information database without performing the calculation of the positional information in real time, whereby whether or not the priority target can be judged at high speed.

In the photographing equipment 1 of the present embodiment, a similarity detecting portion for calculating the similarity from the feature quantity of the face image is further arranged in the face identifying portion 24, where the priority information registering portion 14 sets the predetermined number for determining the detected face image as the preferential face image to be small when the similarity between the face image detected by the face detecting portion 22 and the preferential face image is high.

According to such a configuration, the predetermined number for determining as the preferential face image is set small for the target of the face image of high similarity, and thus judgment is made that the target of high similarity such as parent and child, or relatives has a high possibility of being the priority target, and the registering condition for the priority target is set low, whereby the judgment of the priority target can be made in a shorter period of time. The above process is performed on the target on which the face checking means identified the face image of the target as not the same person.

The photographing equipment 1 having the above effects can be configured by including the registration processing unit 10.

The photographing equipment 1 having similar effects with respect to the imaged face image can be configured by including the imaging portion 34 for photographing the subject; the priority information database 50 for storing the feature quantity indicating the feature of the preferential face image; the face identifying portion 24 for authenticating the preferential face image stored in the priority information database 50 and the face image detected by the face detecting portion 22; and the imaging condition changing portion 32 for judging whether or not the subject photographed by the imaging portion 34 is the priority target based on the check result of the face identifying portion 24, and setting the imaging condition of the imaging portion 34.

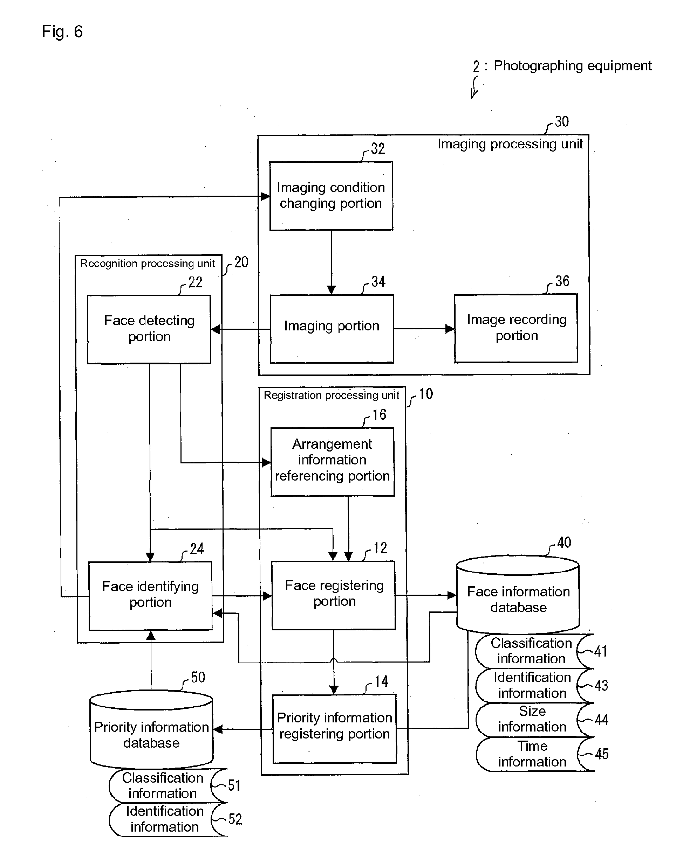

In the description above, a case where the arrangement information referencing portion 16 is arranged in the registration processing unit 10, the arrangement information referencing portion 16 references the arrangement information 42 registered in the face information database 40, and the priority information registering portion 14 determines the priority target has been described, but is not limited thereto. Fig. 6 is a block diagram showing a configuration of the main parts of photographing equipment 2 including the registration processing unit 10, the recognition processing unit 20, and the imaging processing unit 30, showing another embodiment of the present invention.

In the photographing equipment 2 of Fig. 6, the arrangement information referencing portion 16 references the positional information output from the face detecting portion 22, and the face registering portion 12 determines whether or not to register the face information in the face information database 40 based on the arrangement information of the detected face image when classifying and registering the data in the face information database 40. In this case, the arrangement information 42 does not need to be registered in the face information database 40, and thus the data size of the face information database 40 is suppressed, and the speed of the process until the priority information registering portion 14 registers the priority target in the priority information database 50 can be increased.

In Fig. 6, whether or not to output the data is determined based on the arrangement information of the face image output from the face detecting portion 22 to the face registering portion 12, but is not limited thereto. The arrangement information referencing portion 16 may be arranged in the recognition processing unit 20, and whether or not the face image is within a predetermined region may be judged and whether or not to output the data may be determined when outputting the data from the face detecting portion 22 to the face identifying portion 24. In this case as well, the effects similar to the above are obtained since the arrangement information 42 does not need to be registered in the face information database 40.

Finally, each block of the photographing equipments 1, 2 of the present invention, in particular, the priority information registering portion 14, the arrangement information referencing portion 16, and the face identifying portion 24 may be configured by hardware logic, or may be realized by software using a CPU as described below.

In other words, the photographing equipment 1, 2 includes a CPU (Central Processing Unit) for executing a command of a control program for realizing each function, a ROM (Read Only Memory) for storing the program, a RAM (Random Access Memory) for developing the program, a storage device (recording medium) such as a memory for storing the program and various data, and the like. The object of the present invention is achieved also by providing the recording medium, which is recorded with a program code (executable form program, intermediate code program, source program) of the control program of the priority target determining device 10 serving as software for realizing the above-described functions so as to be readable by a computer, to the photographing equipments 1, 2, and then having the computer (or CPU or MPU) read out and execute the program code recorded on the recording medium.

The recording medium may be a tape system such as a magnetic tape or a cassette tape; a disk system including a magnetic disk such as a floppy (registered trademark) disk/hard disk and an optical disk such as a CD-ROM/MO/MD/DVD/CD-R, a card system such as an IC card (include a memory card)/ an optical card; a semiconductor memory system such as mask ROM/EPROM/EEPROM/flash ROM, or the like.

The photographing equipment 1, 2 is configured to be connectable with a communication network, so that the program code may be provided through the communication network. The communication network is not particularly limited, and Internet, an intranet, an extranet, a LAN, ISDN, VAN, a CATV communication network, a virtual private network, a telephone line network, a mobile communication network, a satellite communication network, and the like may be used. The transmission medium configuring the communication network is not particularly limited, and may be a wired line such as IEEE 1394, USB, power line carrier, a cable TV line, a telephone line, and an ADSL line; an infrared line such as IrDA and a remote controller; or a wireless line such as Bluetooth (registered trademark), 802.11 wireless line, HDR, a mobile telephone network, a satellite connection, and a digital terrestrial network. The present invention is also realized in the mode of a computer data signal embedded in the carrier wave in which the program code is embodied in electronic transmission.

Therefore, the photographing equipment 1, 2 of the present invention determines the target to ultimately register in the database as the priority target based on the positional information, and thus the priority target desired by the user can be more accurately registered, whereby the photographing equipment can be suitably used in a device for performing image processing such as photographing equipment, a printing device, a communication device, and an image editing device.

## Claims

1. A priority target determining device for determining a preferential face image from a plurality of face images contained in a plurality of original images;
the priority target determining device comprising:
a face detecting portion (22) for detecting a face image and positional information from the plurality of original images;
a face checking portion (24) for checking a feature of the face image detected by the face detecting portion (22) with a feature of a previously detected face image; and
a determining portion(24) for determining the face images as the preferential face image when number of face images in which the features match reaches a predetermined number as a result of the check by the face checking portion (24); wherein
if the position of the face image detected by the face detecting portion is outside a region set in the original image, the face detecting portion does not send the face image, the face checking portion does not execute the check related to the face image, or the determining portion excludes the number of face image from the number of face images.

2. The priority target determining device according to claim 1, wherein the determining portion (24) excludes the face image from the preferential face image when the number of face images in which the features match reaches the predetermined number and at least one of size information or frequency information of the face image does not reach a predetermined value.

3. The priority target determining device according to claim 1 or 2, further comprising:
a face image registering portion (12) for registering the face image or a feature quantity indicating the feature of the face image and information of the position of the face image in correspondence to each other; wherein
the determining portion (24) determines whether or not to exclude from the preferential face image based on the positional information registered in the face image registering portion.

4. The priority target determining device according to any one of claims 1 to 3, further comprising:
a similarity detecting portion for calculating the similarity from the feature quantity of the face image; wherein
the determining portion sets the predetermined number for determining the detected face image as the preferential face image to be small when the similarity between the face image detected by the face detecting portion and the preferential face image is high.

5. Electronic equipment comprising the priority target determining device according to any one of claims 1 to 4.

6. The electronic equipment according to claim 5, further comprising:
an imaging portion (34) for imaging a subject;
a priority information storage portion (50) for storing a feature quantity indicating the feature of the preferential face image;
a face authentication portion (24) for authenticating the preferential face image stored in the priority information storage portion and the face image detected by the face detecting portion; and
an imaging condition setting portion (32) for judging whether or not a subject photographed by the imaging portion is the priority target based on the authentication result of the face authenticating portion, and setting imaging conditions of the imaging portion (34).

7. A priority target determining method for determining a preferential face image from a plurality of face images contained in a plurality of original images;
the priority target determining method comprising the steps of:
face detecting step of detecting a face image and positional information from the plurality of original images;
face checking step of checking a feature of the face image detected in the face detecting step with a feature of a previously detected face image; and
determining step of determining the face images as the preferential face image when number of face images in which the features match reaches a predetermined number as a result of the check by the face checking step; wherein
if the position of the face image detected in the face detecting step is outside a region set in the image, the face image is not the target of processing in the face detecting step, the face checking step, or the determining step.

8. A program for operating the priority target determining device according to any one of claims 1 to 4, the program causing a computer to function as each portion.

9. A program for operating the electronic equipment according to claim 5 or 6, the program causing a computer to function as each portion.

10. A computer readable recording medium recorded with the program according to claim 8.

11. A computer readable recording medium recorded with the program according to claim 9.
